# EUROPÄISCHE PATENTSCHRIFT

(11) **EP 1 438 180 B1**
(45) Veröffentlichungstag und Bekanntmachung des Hinweises auf die Patenterteilung: **19.04.2006**
(21) Anmeldenummer: 02785247.4
(22) Anmeldetag: 18.10.2002
(51) Int. Cl.: B29C 70/06

(54) **NATURFASERVERSTÄRKTER, KUNSTSTOFFHÄLTIGER FORMKÖRPER UND HERSTELLUNGSVERFAHREN**
MOULDED BODY CONTAINING PLASTIC AND REINFORCED BY NATURAL FIBRES AND MANUFACTURING PROCESS
CORPS MOULE CONTENANT UNE MATIERE PLASTIQUE ET RENFORCEE PAR DES FIBRES NATURELLES ET PROCEDE DE FABRICATION

(30) Priorität: 23.10.2001 AT 16822001
(43) Veröffentlichungstag der Anmeldung: 21.07.2004
(73) Patentinhaber: Rettenbacher, Markus, Dipl.-Ing., A-5412 Puch/Salzburg (AT)
(72) Erfinder: Rettenbacher, Markus, Dipl.-Ing., A-5412 Puch/Salzburg (AT)
(74) Vertreter: Bogensberger, Burkhard
(86) Internationale Anmeldenummer: PCT/EP2002/011704
(87) Internationale Veröffentlichungsnummer: WO 2003/035373

(56) Entgegenhaltungen:
- EP-A- 0 936 245
- EP-A- 1 026 197
- WO-A-90/14935
- DE-A- 19 635 410
- DE-A- 19 855 325
- DE-A- 19 949 975
- JP-A- 54 040 145
- US-A- 5 234 977
- US-A- 5 288 772
- US-A- 5 997 784
- PATENT ABSTRACTS OF JAPAN vol. 2002, no. 09, 4. September 2002 (2002-09-04) & JP 2002 144399 A (NIKKO KASEI KK), 21. Mai 2002 (2002-05-21)
- PATENT ABSTRACTS OF JAPAN vol. 011, no. 080 (C-409), 11. März 1987 (1987-03-11) & JP 61 233061 A (CHISSO CORP), 17. Oktober 1986 (1986-10-17)
- PATENT ABSTRACTS OF JAPAN vol. 013, no. 556 (C-664), 11. Dezember 1989 (1989-12-11) & JP 01 230672 A (KYUZO YAMAOKA), 14. September 1989 (1989-09-14)
- PATENT ABSTRACTS OF JAPAN vol. 018, no. 485 (C-1248), 9. September 1994 (1994-09-09) & JP 06 157839 A (TONEN CHEM CORP), 7. Juni 1994 (1994-06-07)

## Beschreibung

### Technisches Gebiet

Die Erfindung betrifft einen kunststoffhältigen, naturfaserverstärkten und nicht-expandierten Formkörper mit einem Restwassergehalt, sowie ein Verfahren zu seiner Herstellung.

### Hintergrund der Erfindung

In den letzten Jahren ist das Interesse an Naturfaserstoffen in der Kunststoffindustrie sprunghaft angestiegen. Vor allem die Verwendung von Holzfasern, Holzmehl oder Holzschnitzeln in sogenannten "wood like plastic" oder "plastic timber" Materialien, die mit Hilfe der Extrusionstechnik zu Profilen verarbeitet werden, hat einen wahren Boom erlebt.

Nichtsdestotrotz ist das Problem, dass Naturfaserstoffe, insbesondere Holz, selbst im lufttrockenen Zustand immer noch eine gewisse Menge an Restwasser enthalten und dadurch die Qualität von Profilen, die aus Kunststoff und Holzteilen gefertigt werden, oftmals zu wünschen übrig lässt, bisher nicht befriedigend gelöst worden. Vor allem bei Profilen, die mit einer höheren Ausstoßgeschwindigkeit gefertigt werden, treten unkontrollierbare Blasen und Expansionszonen auf, die dadurch verursacht werden, dass nach plastischer oder thermoplastischer Umformung der Rohstoffmischung bei dem nachfolgenden Ausformungsschritt der Formmasse zum Formkörper durch die dabei erfolgende Druckentlastung, z.B. am Düsenausgang einer Extrusionseinheit, das vorhandene Restwasser blitzartig aus der Formmasse verdampft. Dies führt sogar dazu, dass bei höheren Extrusionstemperaturen und -geschwindigkeiten der Zusammenhalt eines derartigen Profils nicht mehr gewährleistet ist.

Viele, der bis jetzt bekannt gewordenen Verfahren gehen davon aus, dass man den Wassergehalt der eingesetzten Rohstoffe, vor dem Einbringen in den eigentlichen und abschliessenden Extrusionsschritt, bei dem das fertige Profil erzeugt wird, so weit wie möglich senken muss. Zu diesem Zweck werden üblicherweise die Naturstoffe entweder durch exzessives, konventionelles Trocknen vor dem Extrusionsprozess auf die Verwendung vorbereitet oder es wird versucht, durch das Hintereinanderschalten von zwei Extrusionseinheiten ein Abdampfen von Wasser zwischen den beiden Aggregaten zu erreichen. Damit verwendet man die erste Extrusionseinheit eigentlich nur als Trockner. Die nach solchen Verfahren erhaltenen, üblichen Materialien besitzen einen Wassergehalt von etwa 0,2 bis 0,5 Gew.%, sind aber noch immer expandiert und weisen gasgefüllte Hohlräume (Bläschen) auf.

Es wurden auch Verfahren vorgeschlagen, bei denen das Restwasser durch Zusatz eines synthetischen Harzes (JP 6123306) oder von anorganischen Stoffen wie CaO und CaSO₄ (JP 6143213, JP 52025844, JP 52025843, JP 57075851 und EP 913243) durch chemische Reaktionen bis zu einem gewünschten Grad eliminiert bzw. verbraucht wird. In all diesen Fällen wird aber das noch verbleibende Restwasser im Zuge eines Extrusionsverfahrens mehr oder weniger stark expandierte Formkörper liefern. Dokument EP-A-0936245 offenbart ein verfahren gemäß dem Oberbegriff des Anspruchs 1 und ein Formkörper gemäß dem Oberbegriff des Anspruchs 7.

### Kurze Darstellung der Erfindung

Der Erfindung liegt nun die Aufgabe zugrunde, durch Verwendung geeigneter Zusatzstoffe, gegebenenfalls in Kombination mit einer speziell abgestimmten Verfahrensweise, zu gewährleisten, dass das in den erfindungsgemäss eingesetzten Ausgangsmaterialien vorhandene Restwasser zumindest teilweise gebunden und jedenfalls die Qualität des Endprodukts nicht durch allfällige Blasenbildung, unkontrollierte Expansion oder geplatzte Blasen beeinträchtigt wird.
Die Aufgabe wird von den in den Patentansprüchen gekennzeichneten Ausführungsformen gelöst.

Erfindungsgemäß besteht der Formkörper aus einer Masse, die eine Mischung aus Partikeln mindestens eines restwasserhältigen, insbesondere pflanzlichen oder tierischen, Fasermaterials mit mindestens einer thermo- oder duroplastischen Substanz sowie einem wasserbindenden Biopolymer und/oder wasserbindenden Biomonomer ist.

Bei der Lösung der Aufgabe geht die Erfindung von dem Grundgedanken aus, dass bei der Verwendung von Naturfaserstoffen, insbesondere von Holz, zur Herstellung von Profilen mit Hilfe von plastischen oder thermoplastischen Umformungsverfahren, beispielsweise mittels Extrusion, selbst bei sorgfältigster und aufwendigster Vortrocknung der verwendeten Rohstoffe, immer noch Wasser (Restwasser) in den Herstellungsprozess eingebracht wird und deshalb zwangsläufig bei abrupter Druckentlastung spontan verdampft und dabei die extrudierte Masse schäumt und expandiert.

Es wurde daher nach einer geeigneten Substanz, insbesondere einer Substanz mit hoher Affinität zu Naturfaserstoffen, gesucht, die dieses Wasser während des Herstellungsverfahrens so zu binden in der Lage ist, dass es bei der Ausformung der Formasse zum fertigen Formkörper zur Verdampfung nicht zur Verfügung steht. Idealerweise sollte dieses Wasser aber nicht ausschließlich durch chemische Reaktionen verbraucht oder irreversibel gebunden werden, sondern sollte wenigstens zum Teil nach der Ausformung noch verfügbar sein, um eine neuerliche Wasseraufnahme des fertigen Formkörpers, z.B. Profils, durch die Umgebungsfeuchte am Ort der Anwendung und die damit einhergehenden Dimensionsänderungen so gering wie möglich zu halten. Dies würde eine zeit- und kostenaufwendige Konditionierung der fertigen Profile ersparen.

Überraschenderweise wurde gefunden, dass durch den Zusatz mindestens eines Biopolymers und/oder Biomonomers die gewünschte Wasserbindung unter bestimmten Voraussetzungen erreicht werden kann und dadurch besonders formen- und dimensionstreue Formkörper - selbst bei höheren Extrusionsgeschwindigkeiten - herstellbar sind, wobei aber das gebundene Wasser trotzdem für das Erreichen einer bestimmten relativen Feuchte im fertigen Profil wirksam ist.

Erfindungsgemäss können kompakte, nicht-expandierte Formkörper mit einem Wassergehalt von 0,3-8 Gew.%, vorzugsweise von 0,3 bis 6 Gew.%, und insbesondere von 1 bis 5 Gew.%, bezogen auf seine Gesamtmasse, hergestellt werden, wenn der Wassergehalt der Rohstoffmischung am Start des Herstellungsverfahrens ebenfalls innerhalb des Bereichs von 0,3 bis 8 Gew. % liegt oder aber wenn durch verfahrenstechnische Massnamen gewährleistet wird, dass der Restwassergehalt der Rohstoffmischung im Zuge der plastischen oder thermoplastischen Umformung zur Formmasse auf die erwähnten Wassergehalte reduziert wird.

So kann beispielsweise der ursprüngliche Restwassergehalt der Rohstoffmischung, wenn erforderlich, während der plastischen oder thermoplastischen Umformung durch Zugabe weiterer wasserbindender oder wasserverbrauchender Substanzen und/oder durch Druckentlastung und Entgasung in der Verfahrenseinheit auf die erfindungsgemäss zulässigen Werte vermindert werden. Wesentlich ist, dass die aus der plastischen oder thermoplastischen Umformung erhaltene Formmasse unmittelbar vor ihrer Ausformung zum Formkörper über einen Wassergehalt von maximal 8 Gew.% verfügt. Wird dieser Grenzwert überschritten, kann der Anteil an Biopolymer und/oder Biomonomer in der Formmasse eine im Zuge der Druckentlastung erfolgende Wasserdampfbildung im Inneren der Formmasse und damit eine Expansion des Formkörpers nicht mehr vollständig verhindern.

Durch diese Massnahmen werden Formkörper erhalten, deren Matrizen keine oder höchstens unwesentliche Anteile an gasgefüllten Hohlräumen (Bläschen) oder Expansionszonen aufweisen. Je nach Wahl des eingesetzten Fasermaterials besitzen die erfindungsgemässen Formkörper ein spezifisches Gewicht von 0,5 bis 2 g/cm³, insbesondere von 1,2 bis 1,5 g/cm³.

Unter einem "nicht-expandierten" oder "expansionsfreien" Formkörper ist im Rahmen der gegenständlichen Erfindung ein Formkörper zu verstehen, der im Zuge des Herstellungsverfahrens durch den Schritt der Ausformung weniger als 10% Volumenszuwachs erfährt, d.h. einen Expansionsindex von weniger als 1,1, insbesondere von 1,00 bis 1,09 und vorzugsweise einen Expansionsindex von 1,00 bis 1,05 aufweist.

### Detaillierte Beschreibung der Erfindung

Erfindungsgemäß werden Biopolymere und/oder Biomonomere als "wasserbindende" Naturstoffe zugesetzt. Hierfür sind jene Biopolymere geeignet, die bei erhöhter Temperatur mit Wasser interagieren und dieses einbauen bzw. einschließen. Dabei können Sie ihre Tertiärstruktur verändern und dadurch sogar thermoplastische Eigenschaften ausbilden, wie dies vor allem bei Stärke der Fall ist. Außerdem verbessern solche Biopolymere, wie z.B. die Stärke, die mechanischen Eigenschaften des Formkörpers. Neben isolierter Stärke können als Stärkequellen auch zerkleinerte Feldfrüchte wie Mais oder Reis in Form von Mehl zugesetzt werden. Weitere geeignete wasserbindende Biopolymere, die man aus nachwachsenden Rohstoffen gewinnen kann, sind Proteine (z.B. Gluten, Kollagen, Keratin), Lignine, Pektine und Hemicellulosen, die Wasser ähnlich binden können wie Stärke. Für die erfindungsgemässen Formkörper sind auch modifizierte Biopolymere geeignet, bevorzugt werden aber nichtmodifizierte, natürliche Biopolymere eingesetzt. Es sind auch solche Biopolymere, die synthetisch, beispielsweise in Fermentationsprozessen, erzeugt werden, geeignet, sofern sie die gleichen oder ähnliche Monomere enthalten wie die natürlichen Biopolymere und über die entsprechende Wasserbindungsfähigkeit verfügen.

Unter "wasserbindenden" Biomonomeren sind Zucker oder zuckerähnliche, mono- bis oligomere Substanzen zu verstehen, durch deren Einsatz der Siedepunkt des Restwassers der Formmasse über die Massetemperatur hinaus erhöht wird, wodurch das Restwasser im Zuge der Druckentlastung bei der Ausformung, beispielsweise am Düsenaustritt einer Extrusionseinheit, nicht verdampft. Geeignete Biomonomere sind beispielsweise Monosaccharide, insbesondere Glucose und Fructose, sowie Disaccharide, insbesondere Saccharose, Lactose und Maltose, weiters Dextrine, aber auch Zuckeralkohole wie Glycerin, Sorbit, Mannit, oder Xylit.

Der Rohstoffmischung wird zumindest ein Biopolymer und/oder zumindest ein Biomonomer in einer Menge von 1 bis 50 Gew.%, bevorzugt 5 bis 40 Gew.%, zugesetzt, wobei sich diese Werte im Falle einer Mischung aus unterschiedlichen Biopolymeren bzw. Biomonomeren oder einer Mischung aus Biopolymer und Biomonomer stets auf die Mischung beziehen.

Darüber hinaus können der Rohstoffmischung weitere Substanzen zugesetzt werden, die zusätzlich überschüssiges Wasser während des plastischen oder thermoplastischen Umformens entweder physikalisch oder chemisch binden können. Unter physikalischer Bindung von Wasser wird verstanden, dass man Substanzen als Zusatzstoffe verwendet, die das vorhandene Wasser als Kristallwasser einbauen, wie dies z. B. bei gebranntem Gips der Fall ist, oder Salze einsetzt, die gegenüber Wasser kolligative Eigenschaften aufweisen und zur Siedepunktserhöhung führen. Unter chemischer Bindung von Wasser wird z.B. der Einsatz von Calciumoxid verstanden, das bei Vorhandensein von Wasser in Calciumhydroxid übergeht und so Wasser direkt "verbraucht", sodass es zur Verdampfung nicht mehr zur Verfügung steht. Zu diesen Substanzen zählen, beispielsweise, Calciumchlorid, Kaliumcarbonat, Magnesiumoxid, Magnesiumsulfat, Kaliumhydroxid, Anhydrit, Kieselgel, Natrium-Kaliumlegierungen, Aluminiumoxid, Oxalsäure, Kaliumacetat, Lithiumchlorid und Ammoniumchlorid. Diese Zusatzstoffe werden bevorzugt in einer Menge von 1 bis 15 Gew. % der Rohstoffmischung zugefügt.

Gegebenenfalls können der Rohstoffmischung weitere, in der Kunststofftechnik übliche, Hilfsmittel wie Weichmacher, Haftvermittler, Farbstoffe, Gleitmittel, Stabilisatoren oder Antioxidantien in einer Menge von vorzugsweise 0,2 bis 10 Gew.%, insbesondere von 0,5 bis 8 Gew.%, bezogen auf die Gesamtmasse der Rohstoffmischung, zugegeben werden.

Als thermo- oder duroplastische Substanzen sind jene Kunststoffe als Matrix für die Masse des Formkörpers geeignet, die extrudiert, pelletiert, gepresst, pultrutiert oder spritzgegossen werden können. Der Begriff "Matrix" steht hier für den Teil der Formmasse, der den Zusammenhalt der Naturfaserstoffe zu einem bestimmten Formteil gewährleisten soll. Geeignete thermo- oder duroplastische Substanzen sind sämtliche Kunststoffe, die auf dem Gebiet der "wood-like plastics" bzw. "plastic timbers" zum Einsatz kommen. Neben den wichtigsten Kunststoffen für die Holzextrusion wie Polypropylen, Polyethylen oder PVC soll hier insbesondere Melamin genannt werden, das eine hohe Affinität zu Holz aufweist, sehr abriebfest ist, ökologisch unbedenklich und hinsichtlich seiner thermoplastischen Eigenschaften variierbar ist. Die Rohstoffmischung kann 5 bis 50 Gew.%, bevorzugt aber 10 bis 35 Gew.%, an Kunststoffen enthalten.

Als wasserhältige Fasermaterialien sind im Prinzip alle Materialien pflanzlichen oder tierischen Ursprungs verwendbar, die faserige Polymere enthalten und dadurch den Formkörpern gute Festigkeitseigenschaften verleihen können. Beispiele für geeignete pflanzliche Fasermaterialien sind Holzfasern, Holzmehl oder Holzschnitzel, vorwiegend cellulosehältige Materialien wie Stroh, Altpapier, Hanf oder Flachs. Aber auch tierisches Fasermaterial, z.B. in Form von Lederabfällen, kann zum Einsatz kommen. Durch die Fasern wird vor allem die Zugfestigkeit der erfindungsgemässen Formkörper erhöht. Die natürlichen, restwasserhältigen Fasermaterialien sind in einer Menge von 5 bis 85 Gew.% in der Rohstoffmischung enthalten. Dass beim erfindungsgemässen Verfahren das Fasermaterial nicht völlig trocken sein muss, senkt den Gesamtenergieaufwand für das Verfahren beträchtlich.

Die verwendeten Naturfasermaterialien können auf Grund ihres Aufbaues poröser Natur sein. Insbesondere Holz, das zu zwei Dritteln aus Hohlräumen besteht, behält diese Struktur durch den erfindungsgemässen Verarbeitungsprozess bei und kann so zur Reduktion der Dichte der Formkörper und der damit verbundenen Kosteneinsparung beitragen.

Die plastischen oder thermoplastischen Umformungstechniken stellen die bevorzugten Verfahren in der kunststoffverarbeitenden Industrie dar. Die gegenständliche Erfindung kann aber auf sämtliche bekannte Umformungsverfahren, beispielsweise Pultrusion, angewendet werden.

"Wood-like plastic" oder "plastic timber" Produkte, zu denen auch die erfindungsgemässen Formkörper gehören, werden vorwiegend durch Profilextrusion oder durch Spritzguss erzeugt.

Es können vorab mit den verschiedenen Rohstoffen durch Extrusion, Pelletierung, oder Heissmischung Granulate erzeugt werden, die anschliessend in einem Profilextruder oder in einer Spritzgussmaschine zu fertigen Formteilen verarbeitet werden.

Zur Herstellung der Formkörper werden die Partikel des restwasserhältigen, pflanzlichen oder tierischen, Fasermaterials mit mindestens einer thermo- oder duroplastischen Substanz aus der Gruppe der Kunststoffe sowie zumindest einem Biopolymer und/oder mindestens einem Biomonomer gemischt. Diese Rohstoffmischung wird dann bei einer Temperatur zumindest über der Raumtemperatur, bevorzugt bei 100 bis 300 °C, besonders bevorzugt bei 130 bis 210 ° C, und/oder bei einem gegenüber dem Atmosphärendruck erhöhten Druck von bis zu 500 bar, bevorzugt bei einem Druck von 10 bis 300 bar, insbesondere von 50 bis 200 bar, zu einer plastischen Formmasse umgeformt. Die plastische Formmasse wird dann in die gewünschte Form des Formkörpers gebracht, den man nach der Abkühlung und Verfestigung der Masse erhält. Um eine Schädigung und thermische Degradation des Biopolymers oder Biomonomers zu unterbinden, wird vorzugsweise bei Temperaturen von maximal 210°C gearbeitet.

In den letzten Jahren hat sich auch ein Verfahren etabliert, das direkt von den pulverförmigen Rohstoffen ausgehend in einem Arbeitsschritt fertige Profile erzeugt. Dieses Verfahren ist zum Beispiel in der WO 90/14935 beschrieben.

Erfindungsgemäss werden das nicht vollkommen trockene, pflanzliche Fasermaterial, beispielsweise Holzmehl, Kunststoffgranulat, Biopolymer uns/oder Biomonomer und, gegebenenfalls, die Zusatzstoffe mit oder ohne vorhergehende Mischung direkt in die Einzugsöffnung eines Extruders dosiert. Bei diesem Verfahren ist das Problem des Restwassers durch eingesetzte Naturfaserstoffe, insbesondere bei Holzmaterialien, am deutlichsten. Bei dieser sogenannten "Direktherstellung" hat sich das erfindungsgemässe Verfahren, bei dem das Restwasser durch die Biopolymere und/oder Biomonomere abgebunden wird, deshalb besonders gut bewährt.

Durch Erwärmung und/oder Druckentlastung der Masse innerhalb der Verfahrenseinheit, beispielsweise einer Extruderschnecke, kann ein allfälliger, überschüssiger Wassergehalt der Masse durch Verdampfung vermindert werden. Der Wasserdampf wird, bevorzugt, durch sogenannte Entgasungsöffnungen im Gehäuse der Verfahrenseinheit abgeführt.

Wenn verdampfbares Wasser in der Formmasse vorhanden ist und beispielsweise mit einem Extruder bei 120 bis 200 Grad Celsius Massetemperatur und am Profildüsenaustritt mit ca. 100 bar gearbeitet wird, wird dieses Wasser - ohne die erfindungsgemässen Massnahmen - bei Druckabfall auf Atmosphärendruck schlagartig verdampfen und ein geschäumtes, expandiertes Produkt mit gasgefüllten Hohlräumen und Bläschen entstehen, wie dies beispielsweise bei dem Verfahren der WO 90/14935 der Fall ist. Dieser hier unerwünschte Effekt wird durch die gegenständliche Erfindung beseitigt und ein kompakter, nichtexpandierter Formkörper erzeugt, der bereits unmittelbar nach seiner Herstellung, d.h. nach Verfestigung der unter erhöhtem Druck und/oder erhöhter Temperatur durch plastische oder thermoplastische Umformung einer Rohstoffmischung erhaltenen und einer nachfolgenden Ausformung unterzogenen Formmasse, einen Wassergehalt von 0,3 bis 8 Gew.%, bezogen auf seine Gesamtmasse, aufweist. Es ist ein weiteres Kennzeichen der vorliegenden Erfindung, dass der Wassergehalt des ausgeformten Produkts im wesentlichen dem Wassergehalt der Formmasse unmittelbar vor dem Ausformungsschritt entspricht. "Im wesentlichen" heisst, dass durch den Schritt der Ausformung der Formmasse zum Formkörper, beispielsweise beim Durchtritt der Formmasse durch eine Extruderdüse und nachfolgender Druckentlastung, kein Wasserverlust durch Verdampfung aus dem Inneren der Formmasse sondern höchstens ein Abdampfen von oberflächlich anhaftender Feuchtigkeit erfolgt, was aber keinerlei negative Auswirkungen auf die vorliegende Erfindung hat.

Abhängig von den Anwendungen der Formkörper sind die Eigenschaften wie UV-Beständigkeit, Zug- und Druckfestigkeit, Farbe, Wasserbeständigkeit etc., innerhalb eines weitgehend variierbaren Bereichs steuerbar.

Dem Einsatz der erfindungsgemäßen Formkörpern sind kaum Grenzen gesetzt. So kann beispielsweise durch Extrusion zunächst ein lagerbares, entweder expansionsfreies oder nach dem Verfahren der WO 90/14935 expandiertes, Granulat hergestellt werden, das in weiteren Arbeitsgängen nach dem Verfahren der vorliegenden Erfindung aufgeschmolzen und zu Profilen, Spritz- und Druckgussstücken oder ähnlichem verarbeitet werden kann. Die Profile oder Spritzgussteile können sowohl im Innen- als auch im Aussenbereich Verwendung finden, überall dort wo heute reine Kunststoff- oder Holzteile im Einsatz sind. Beispiele für solche Formkörper sind Kantein, Leisten, Fassadenteile, Bodendielen, Zaunelemente, Kabelkanäle, Blenden, Profile, Verkleidungen, Verpackungsmaterialien, Hohlprofile, Zierleisten oder Dockeinrichtungen.

Nachfolgend wird das erfindungsgemässe Verfahren anhand von Beispielen näher beschrieben.

### Vergleichsbeispiel 1

In einen konischen Doppelschneckenextruder mit Entgasungsöffnungen (Firma Cincinnati Extrusion) wurden pro Stunde 80 kg Holzspäne der durchschnittlichen Größe von 1 mm (Wassergehalt der Holzspäne 10 Gew. %), 18 kg Polypropylen und 2 Gew. % Haftvermittler gravinietrisch eindosiert. Die Entgasungsöffnungen des Extruders waren geschlossen. Als Formkörper wurde eine Fußbodenleiste hergestellt.

### Extrusionsbedingungen:

Temperatur Einzugszone: 150 °C
Temperatur Zone 1: 160 °C
Temperatur Zone 2: 200 °C
Temperatur Zone 3: 200 °C
Temperatur Zone 4: 190 °C
Temperatur Düseneinlauf: 190 °C
Düsentemperatur: 190 °C
Direkt angeflanschte Kalibrierung: 50 °C
Schneckentemperatur 190 °C
Schneckendrehzahl: 35 U/min
Massetemperatur: 190 °C
Austrittsgeschwindigkeit der Leiste aus der Düse: 5,5 m/min

Die so hergestellte Fußbodenleiste wies inakzeptable Expansionen und Blasen auf. Das am Düsen- bzw. Kalibrierungsende verdampfende Wasser verhinderte eine formtreue Herstellung. Die Verdampfung von Wasser war so stark, dass ein Zusammenhalt des Profils nicht gewährleistet war.

### Vergleichsbeispiel 2

Die im Beispiel 1 eindosierte Rohstoffmischung von insgesamt 100 kg/h wurde bei gleichen Extrusionsbedingungen auf 20 kg/h reduziert. Alle anderen Bedingungen wurden beibehalten. Die Austrittsgeschwindigkeit der Leiste aus der Düse betrug ca. 1 m/min.

Es konnte zumindest ein zusammenhängendes Profil erzeugt werden, wobei aber die unkontrollierten Expansionen und Blasen immer noch sehr stark auftraten.

### Vergleichsbeispiel 3

Es wurde wie im Beispiel 2 verfahren. Die einzige Änderung gegenüber Beispiel 2 war die Verwendung von Holz, das vor der Extrusion auf einen Wassergehalt von ca. 5 Gew.% getrocknet wurde. Die Düsenaustrittsgeschwindigkeit der Leiste betrug ca. 1 m/min.
Es konnte ein zusammenhängendes Profil erzeugt werden, das aber noch immer einige Expansionsstellen und Blasen aufwies.

### Beispiel 4

Gegenüber dem Beispiel 3 wurde der Rezeptur feines Maismehl (zerkleinerte Maiskörner mit einem Stärkegehalt von 70 Gew.%) hinzugefügt. Dies ergibt dann folgende Zusammensetzung:

| | |
|---|---|
| 71 Gew.% | Holzspäne |
| 15 Gew. % | Polypropylen |
| 12 Gew.% | Maismehl (Wassergehalt 11 Gew.%) |
| 2 Gew.% | Haftvermittler |

Die Extrusionsbedingungen entsprachen jenen des Beispiels 3 mit einer Rohstoffdosierungsrate von 20 kg/h in den Extruder und einer Austrittsgeschwindigkeit des Profils am Düsenende von ca. 1 m/min.

Mit dieser Rezeptur und den oben beschriebenen Bedingungen konnte eine formtreue und ansprechende Fussbodenleiste hergestellt werden.

### Beispiel 5

Es wurde wie im Beispiel 4 verfahren. Die einzige Änderung gegenüber dem Beispiel 4 war vorerst die Erhöhung der Dosierungsrate der Rohstoffmischung auf 80 kg/h. Daraus resultierte eine Profilaustrittsgeschwindigkeit von ca. 4 m/min. Bis zu dieser Geschwindigkeit konnte ein einwandfreies, blasenfreies Profil erzeugt werden.

Anschließend wurde die Dosierungsrate der Rohstoffmischung auf 100 kg/h erhöht. Dies ergab eine Profilaustrittsgeschwindigkeit von ca. 5,5 m/min.

Erste Expansionsstellen (Blasen) am fertigen Profil mussten festgestellt werden. Durch das Öffnen von Entgasungsöffnungen im ersten Drittel des Extrusionsgehäuses und der Zudosierung von 5 Gew.% Magnesiumoxid zu der verwendeten Rohstoffmischung, konnte ein einwandfreies und formtreues Profil erzeugt werden.

### Beispiel 6

Mit Hilfe eines Einschneckenextruders wurde ein Granulat hergestellt, das folgende Zusammensetzung hatte:

| | |
|---|---|
| 67 Gew. % | Holz (Restwassergehalt ca.11 Gew.%) |
| 15 Gew.% | Maismehl (Restwassergehalt ca.11 Gew.%) |
| 15 Gew. % | Polypropylen |
| 2 Gew.% | Haftvermittler |
| 1 Gew. % | Titanoxyd |

Die aus der obigen Rohstoffmischung (Restwassergehalt ca. 9 Gew.%) hergestellten, fertigen Granulate wiesen unmittelbar nach der Extrusion einen Wassergehalt von 5 Gew.% auf und waren - analog zu WO 90/14935 - leicht expandiert. Das Schüttgewicht betrug 500 kg/m³.

Diese nicht weiter getrockneten Granulate wurden in einen konischen Doppelschneckenextruder zu einem Profil extrudiert. Es wurden 100 kg expandiertes Granulat pro Stunde in den Extruder eindosiert. Die Entgasungsöffnungen des Extruders waren geschlossen.

### Extrusionsbedingungen:

| | |
|---|---|
| Temperatur Einzugszone: | 150° C |
| Temperatur Zone 1: | 155° C |
| Temperatur Zone 2: | 160° C |
| Temperatur Zone 3: | 165° C |
| Temperatur Zone 4: | 170° C |
| Temperatur Düseneinlauf: | 170° C |
| Düsentemperatur: | 170° C |
| Direkt angeflanschte Kalibrierung: | 40° C |
| Schneckentemperatur: | 165° C |
| Schneckendrehzahl: | 35 U/min |
| Massetemperatur: | 165° C |

Austrittsgeschwindigkeit der Leiste aus der Düse: ca. 5,5 m/min

Obwohl die Massetemperatur 165° C betrug, konnte auch bei einer Profilextrusionsgeschwindigkeit von ca. 5,5 m/min ein expansionsfreies (Expansionsindex < 1,05) und dimensionstreues Profil erzeugt werden. Der Wassergehalt des Profils entsprach dem Wassergehalt des eingesetzten Granulats.
Dieses Beispiel macht deutlich, dass bei einem Restwassergehalt der Rohstoffmischung von ca. 9 Gew.% im ersten (nicht erfindungsgemässen) Verfahrensteil ein expandierter Formkörper erhalten wurde, während im zweiten (erfindungsgemässen) Verfahrensteil unter vergleichbaren Bedingungen und derselben Formmasse, jedoch bei auf 5 Gew.% reduziertem Restwassergehalt, ein im wesentlichen expansionsfreier Formkörper erhalten wurde.

Der Vorteil der so hergestellten Profile liegt darin, dass die Restwassergehalte der fertigen Profile schon beim Austritt aus der Wasser-Kühlstrecke annähernd den Bedingungen einer durchschnittlichen Umgebungsfeuchte entsprechen und die Profile vor ihrem Praxiseinsatz daher nicht mehr aufwendig konditioniert werden müssen. Die Dimensionsstabilität ist bereits unmittelbar nach der Profilextrusion gegeben.

### Beispiel 7

Es wurde wie im Beispiel 3 verfahren. Zusätzlich zu den dort beschriebenen Rohstoffen wurde in der Rezeptur Saccharose verwendet. Daraus ergibt sich folgende Rohstoffmischung:

| | |
|---|---|
| 70 Gew.% | Holzspäne (Restwassergehalt 5 Gew.%) |
| 18 Gew. % | Polypropylen |
| 10 Gew. % | Saccharose |
| 2 Gew. % | Haftvermittler |

Es konnte ein ansprechendes Profil erzeugt werden, das keine Expansionsstellen aufwies.

## Patentansprüche

1. Verfahren zur Herstellung eines thermo- oder duroplastischen Formkörpers, wobei Partikel eines pflanzlichen oder tierischen Fasermaterials mit mindestens einem thermo- oder duroplastischen Kunststoff und mit mindestens einem wasserbindenden Biopolymer aus der Gruppe der Stärken, Pektine, Lignine, Proteine und Hemicellulosen und/oder wasserbindenden Biomonomer aus der Gruppe der Monosaccharide, Disaccharide, Dextrine und Zuckeralkohole vermischt und als Rohstoffmischung unter Temperatur- und Druckerhöhung plastisch oder thermoplastisch zu einer Formmasse umgeformt werden, worauf diese unter Druckentlastung einer Ausformung zum fertigen Formkörper unterzogen wird, **dadurch gekennzeichnet, dass** die Rohstoffmischung einen Wassergehalt von 0,3 - 8 Gew.%, vorzugsweise von 0,3 bis 6 Gew. %, insbesondere von 1 bis 5 Gew.%, aufweist oder im Zuge der plastischen oder thermoplastischen Umformung zur Formmasse auf einen solchen reduziert wird, und die unter Druckentlastung stattfindende Ausformung der Formmasse zum Formkörper ohne Wasserverlust aus dem Inneren der Formmasse erfolgt, sodass ein Formkörper mit einem Expansionsindex von weniger als 1,1 entsteht und der Wassergehalt des Formkörpers im wesentlichen demjenigen der Formmasse entspricht.

2. Verfahren nach Anspruch 1, wobei die plastische oder thermoplastische Umformung durch Extrusion, Pultrusion, Heissmischung, Pressen, Pelletieren oder Spritzguss bei einer Temperatur von 100 bis 300 °C, vorzugsweise 130 bis 210 °C, und bei einem Druck von 1 bis 500 bar, vorzugsweise 50 bis 200 bar, erfolgt.

3. Verfahren nach Anspruch 1 oder 2, wobei die plastische oder thermoplastische Umformung in einer Vorrichtung erfolgt, die mit Entgasungsöffnungen ausgestattet ist und wobei während der Umformung der Wassergehalt der Rohstoffmischung bzw. der Formmasse durch partielle Druckentlastung und Abzug von frei werdendem Wasserdampf durch die Entgasungsöffnungen vermindert wird.

4. Verfahren nach einem der Ansprüche 1 bis 3, wobei das pflanzliche Fasermaterial aus der Gruppe Holzfasern, Holzmehl, Holzschnitzel, cellulosehältige Recycling-Materialien, Altpapier, Hanf und Lederabfälle, und der thermo- oder duroplastische Kunststoff aus der Gruppe Polyäthylen, Polypropylen, PVC, Polymethacrylat, Polystyrol, Harnstoffharz und Melamin ausgewählt wird.

5. Verfahren nach einem der Ansprüche 1 bis 4, wobei der Rohstoffmischung ausserdem eine wasserbindende oder wasserverbrauchende Substanz aus der Gruppe Calciumchlorid, Calciumoxid, Kaliumcarbonat, Magnesiumoxid, Magnesiumsulfat, Kaliumhydroxid, Phosphorpentoxid, Molekularsiebe, Calciumsulfat, Anhydrit, gebrannter Gips, Kieselgel, Natrium-Kaliumlegierungen, Aluminiumoxid, Oxalsäure, Kaliumacetat, Lithiumchlorid und Ammoniumchlorid, in einer Menge von vorzugsweise 1 bis 15 Gew.%, bezogen auf die Gesamtmasse der Rohstoffmischung, zugesetzt wird.

6. Verfahren nach einem der Ansprüche 1 bis 5, zur Herstellung eines Formkörpers, der ohne Konditionierung einen Wassergehalt aufweist, der einer durchschnittlichen Umgebungsfeuchte entspricht.

7. Thermo- oder duroplastischer Formkörper aus einer nach Druckentlastung verfestigten Formmasse einer plastisch oder thermoplastisch umgeformten Rohstoffmischung, welche Partikel mindestens eines pflanzlichen oder tierischen Fasermaterials zusammen mit mindestens einem thermo- oder duroplastischen Kunststoff sowie mindestens einem wasserbindenden Biopolymer aus der Gruppe der Stärken, Pektine, Lignine, Proteine und Hemicellulosen und/oder mindestens einem wasserbindenden Biomonomer aus der Gruppe der Monosaccharide, Disaccharide, Dextrine und Zuckeralkohole enthält, **dadurch gekennzeichnet, dass** der Formkörper und die Formmasse einen Wassergehalt von 0,3 - 8 Gew.%, vorzugsweise von 0,3 bis 6 Gew.%, insbesondere von 1 bis 5 Gew.% aufweisen und der Formkörper keine oder höchstens unwesentliche Anteile an gasgefüllten Hohlräumen oder Expansionszonen, entsprechend einem Expansionsindex von weniger als 1,1, insbesondere von 1,0 - 1,09, enthält.

8. Formkörper nach Anspruch 7, mit einem spezifischen Gewicht von 1,2 bis 2 g/cm³, vorzugsweise von 1,2 bis 1,5 g/cm³.

9. Formkörper nach Anspruch 7 oder 8, wobei das pflanzliche Fasermaterial aus der Gruppe Holzfasern, Holzmehl, Holzschnitzel, cellulosehältige Recycling-Materialien, Altpapier, Hanf und Lederabfälle, und der thermo- oder duroplastische Kunststoff aus der Gruppe Polyäthylen, Polypropylen, PVC, Polymethacrylat, Polystyrol, Harnstoffharz und Melamin ausgewählt ist.

10. Formkörper nach einem der Ansprüche 7 bis 9, wobei die Rohstoffmischung zusätzlich eine wasserbindende oder wasserverbrauchende Substanz aus der Gruppe Calciumchlorid, Calciumoxid, Kaliumcarbonat, Magnesiumoxid, Magnesiumsulfat, Kaliumhydroxid, Phosphorpentoxid, Molekularsiebe, Calciumsulfat, Anhydrit, gebrannter Gips, Kieselgel, Natrium-Kaliumlegierungen, Aluminiumoxid, Oxalsäure, Kaliumacetat, Lithiumchlorid und Ammoniumchlorid in einer Menge von vorzugsweise 1 bis 15 Gew. %, bezogen auf die Gesamtmasse der Rohstoffmischung, enthält.

11. Formkörper nach einem der Ansprüche 7 bis 10, der 5 bis 50 Gew. %, vorzugsweise 10 bis 35 Gew.%, an thermo- oder duroplastischem Kunststoff, 1 bis 50 Gew. %, vorzugsweise 5 bis 40 Gew. %, an Biopolymer oder Biomonomer oder einer Mischung aus Biopolymer und Biomonomer, und 5 bis 85 Gew.% an pflanzlichem Fasermaterial enthält.

12. Formkörper nach einem der Ansprüche 7 bis 11, der ausserdem Zusatzstoffe aus der Gruppe der Haftvermittler, Farben, Gleitmittel, Stabilisatoren und Antioxidantien in einer Menge von vorzugsweise 0,2 bis 10 Gew.%, bezogen auf seine Gesamtmasse, enthält.

13. Formkörper nach einem der Ansprüche 7 bis 12, der ohne Konditionierung einen Wassergehalt aufweist, der einer durchschnittlichen Umgebungsfeuchte entspricht.

14. Formkörper nach einem der Ansprüche 7 bis 13, in Form eines Granulatpartikels oder in Form eines technischen Elements aus der Gruppe Kantel, Leiste, Fassadenteil, Bodendiele, Zaunelement, Kabelkanal, Blende, Profil, Verkleidung, Verpackungsmaterial, Zierleiste und Dockeinrichtung.

15. Formkörper nach einem der Ansprüche 7 bis 14, erhältlich in einem Verfahren gemäss einem der Ansprüche 1 bis 6.

## Claims

1. Process for manufacturing a thermoplastic or thermosetting plastic moulded body, particles of a vegetable or animal fibre material being mixed with at least one thermoplastic or thermosetting plastic and with at least one water-binding biopolymer from the group consisting of the starches, pectins, lignins, proteins and hemicelluloses and/or water binding biomonomers from the group consisting of the monosaccharides, disaccharides, dextrins and sugar alcohols, and as a raw material mixture, being plastically or thermoplastically converted into a moulding material with an increase of temperature and pressure, whereupon said moulding material is subjected to shaping to give the final moulded body with pressure relief, **characterised in that** the raw material mixture has a water content of 0.3-8% by weight, preferably of 0.3 to 6% by weight, in particular of 1 to 5% by weight, or is reduced to such a water content in the course of the plastic or thermoplastic conversion to the moulding material, and the shaping of the moulding material into the moulded body, which takes place with pressure relief, is effected without water loss from the interior of the moulding material, so that a moulded body having an expansion index of less than 1.1 forms and the water content of the moulded body substantially corresponds to that of the moulding material.

2. Process according to Claim 1, the plastic or thermoplastic conversion being effected by extrusion, pultrusion, hot mixing, pressing, pelleting or injection moulding at a temperature of 100 to 300°C, preferably 130 to 210°C, and at a pressure of 1 to 500 bar, preferably 50 to 200 bar.

3. Process according to Claim 1 or 2, the plastic or thermoplastic conversion being effected in an apparatus which is equipped with devolatilization orifices and the water content of the raw material mixture or of the moulding material being reduced during the conversion by partial pressure relief and withdrawal of liberated steam through the devolatilization orifices.

4. Process according to any of Claims 1 to 3, the vegetable fibre material being selected from the group consisting of wood fibres, wood meal, wood chips, cellulose-containing recycled materials, waste paper, hemp and leather wastes, and the thermoplastic or thermosetting plastic being selected from the group consisting of polyethylene, polypropylene, PVC, polymethacrylate, polystyrene, urea resin and melamine.

5. Process according to any of Claims 1 to 4, a water-binding or water-consuming substance from the group consisting of calcium chloride, calcium oxide, potassium carbonate, magnesium oxide, magnesium sulphate, potassium hydroxide, phosphorus pentoxide, molecular sieves, calcium sulphate, anhydrite, calcined gypsum, silica gel, sodium-potassium alloys, alumina, oxalic acid, potassium acetate, lithium chloride and ammonium chloride, in an amount of, preferably 1 to 15% by weight, based on the total mass of the raw material mixture, also being added to the raw material mixture.

6. Process according to any of Claims 1 to 5, for the manufacture of a moulded body which, without conditioning, has a water content which corresponds to an average ambient humidity.

7. Thermoplastic or thermosetting plastic moulded body comprising a moulding material which has solidified after pressure relief and consists of a plastically or thermoplastically converted raw material mixture which contains particles of at least one vegetable or animal fibre material together with at least one thermoplastic or thermosetting plastic and at least one water-binding biopolymer from the group consisting of the starches, pectins, lignins, proteins and hemicelluloses and/or at least one water-binding biomonomer from the group consisting of the monosaccharides, disaccharides, dextrins and sugar alcohols, **characterised in that** the moulded body and the moulding material have a water content of 0.3-8% by weight, preferably 0.3 to 6% by weight, in particular of 1 to 5% by weight, and the moulded body contains no or at most insignificant portions of gas-filled cavities or expansion zones, corresponding to an expansion index of less than 1.1, in particular of 1.0-1.09.

8. Moulded body according to Claim 7, having a density of 1.2 to 2g/cm³, preferably of 1.2 to 1.5g/cm³.

9. Moulded body according to Claim 7 or 8, the vegetable fibre material being selected from the group consisting of wood fibres, wood meal, wood chips, cellulose-containing recycled materials, waste paper, hemp and leather wastes, and the thermoplastic or thermosetting plastic being selected from the group consisting of polyethylene, polypropylene, PVC, polymethacrylate, polystyrene, urea resin and melamine.

10. Moulded body according to any of Claims 7 to 9, the raw material mixture additionally containing a water-binding or water-consuming substance from the group consisting of calcium-chloride, calcium-oxide, potassium carbonate, magnesium oxide, magnesium sulphate, potassium hydroxide, phosphorus pentoxide, molecular sieves, calcium sulphate, anhydrite, calcined gypsum, silica gel, sodium-potassium alloys, alumina, oxalic acid, potassium acetate, lithium chloride and ammonium chloride in an amount of preferably 1 to 15% by weight, based on the total mass of the raw material mixture.

11. Moulded body according to any of Claims 7 to 10, which contains 5 to 50% by weight, preferably 10 to 35% by weight, of thermoplastic or thermosetting plastic, 1 to 50% by weight, preferably 5 to 40% by weight, of biopolymer or biomonomer or of a mixture of biopolymer and biomonomer, and 5 to 85% by weight of vegetable fibre material.

12. Moulded body according to any of Claims 7 to 11, which also contains additives from the group consisting of the adhesion promoters, dyes, lubricants, stabilisers and antioxidants in an amount of, preferably, 0.2 to 10% by weight, based on its total mass.

13. Moulded body according to any of Claims 7 to 12, which, without conditioning, has a water content which corresponds to an average ambient humidity.

14. Moulded body according to any of Claims 7 to 13, in the form of granular particles or in the form of an industrial element from the group consisting of squared timber, strip, façade part, floor boards, fence element, cable duct, facing panel, profile, cladding, package material, trim and docking device.

15. Moulded body according to any of Claims 7 to 14, obtainable by a process according to any of Claims 1 to 6.

## Revendications

1. Procédé de fabrication d'un corps formé thermoplastique ou thermodurci, dans lequel des particules d'un matériau fibreux végétal ou animal sont mélangées avec au moins un matériau synthétique thermoplastique ou thermodurcissable et avec au moins un biopolymère capable de fixer l'eau, du groupe des amidons, des pectines, des lignines, des protéines et des hémicelluloses et / ou un biomonomère capable de fixer l'eau, du groupe des monosaccharides, des disaccharides, des dextrines et des sucres alcools et dans lequel le mélange de matières premières est transformé à une température et à une pression augmentées, par une transformation plastique ou thermoplastique en une matière moulable, celle-ci subissant ensuite une déformation par l'effet d'une réduction de la pression, pour obtenir un corps formé final ; **caractérisé en ce que** le mélange de matières premières présente une teneur en eau de 0,3 - 8 % en poids, de préférence, de 0,3 à 6 % en poids ou, plus particulièrement, de 1 à 5 % en poids ou que cette teneur est réduite à un tel niveau par suite de la transformation plastique ou thermoplastique en matière moulable et **en ce que** la transformation de la matière moulable en corps formé, s'effectuant sous une pression réduite, se déroule sans perte d'eau de l'intérieur de la matière moulable, de sorte que l'on obtient un corps formé avec un taux d'expansion inférieur à 1,1 et que la teneur en eau du corps formé correspond sensiblement à celle de la matière moulable.

2. Procédé selon la revendication 1, dans lequel la transformation plastique ou thermoplastique se fait par extrusion, par pultrusion, par malaxage à chaud, par pressage, par pelletisation ou par moulage par injection, à une température de 100 à 300 °C, de préférence de 130 à 210 °C et sous une pression de 1 à 500 bars, de préférence de 50 à 200 bars.

3. Procédé selon la revendication 1 ou la revendication 2, dans lequel la transformation plastique ou thermoplastique se fait dans une installation qui est munie d'ouvertures de dégazage et dans lequel, pendant la transformation, la teneur en eau du mélange de matières premières ou de la matière moulable est diminuée par une réduction partielle de la pression et une évacuation de la vapeur d'eau libre formée, par les ouvertures de dégazage.

4. Procédé selon une des revendications 1 à 3, dans lequel le matériau fibreux végétal est choisi dans le groupe des fibres de bois, des farines de bois, des copeaux de bois, des matériaux de recyclage contenant de la cellulose, des vieux papiers, des déchets de chanvre et des déchets de cuir et dans lequel le matériau synthétique thermoplastique ou thermodurcissable est choisi dans le groupe des polyéthylènes, des polypropylènes, des PVC, des polyméthacrylates, des polystyrènes, des aminoplastes, et des mélamines.

5. Procédé selon une des revendications 1 à 4, dans lequel le mélange de matières premières contient, en outre, une substance capable de fixer ou d'absorber l'eau, choisie dans le groupe du chlorure de calcium, de l'oxyde de calcium, du carbonate de potassium, de l'oxyde de magnésium, du sulfate de magnésium, de l'hydroxyde de potassium, du pentoxyde de phosphore, des tamis moléculaires, du sulfate de calcium, de l'anhydrite, du gypse calciné, des gels de silice, des alliages sodium - potassium, de l'oxyde d'aluminium, de l'acide oxalique, de l'acétate de potassium, du chlorure de lithium et du chlorure d'ammonium, en une quantité allant, de préférence, de 1 à 15 % en poids du poids total du mélange de matières premières.

6. Procédé selon une des revendications 1 à 5, pour fabriquer un corps formé qui, sans conditionnement, présente une teneur en eau qui correspond à l'humidité moyenne de l'environnement.

7. Corps formé thermoplastique ou thermodurci obtenu - après une réduction de la pression - par durcissement d'une matière moulable obtenue par une transformation plastique ou thermoplastique d'un mélange de matières premières, dont les particules contiennent au moins un matériau fibreux végétal ou animal ainsi qu'au moins un matériau synthétique thermoplastique ou thermodurcissable, au moins un biopolymère capable de fixer l'eau du groupe des amidons, des pectines, des lignines, des protéines et des hémicelluloses et / ou au moins un biomonomère capable de fixer l'eau du groupe des monosaccharides, des disaccharides, des dextrines et des sucres alcools, **caractérisé en ce que** le corps formé et la matière moulable ont une teneur en eau de 0,3 - 8 % en poids, de préférence de 0,3 à 6 % en poids ou, plus particulièrement, de 1 à 5 % en poids et **en ce que** le corps formé ne comporte aucune portion ou au plus une portion insignifiante constituant un espace vide rempli de gaz ou des zones d'expansion, correspondant à un taux d'expansion inférieur à 1,1 et, plus particulièrement de 1,0 - 1,09.

8. Corps formé selon la revendication 7, avec un poids volumique de 1,2 à 2 g/cm³ et, de préférence, de 1,2 à 1,5 g/cm³.

9. Corps formé selon la revendication 7 ou la revendication 8, dans lequel le matériau fibreux végétal est choisi dans le groupe des fibres de bois, des farines de bois, des copeaux de bois, des matériaux de recyclage contenant de la cellulose, des vieux papiers, des déchets de chanvre et des déchets de cuir et dans lequel le matériau synthétique thermoplastique ou thermodurcissable est choisi dans le groupe des polyéthylènes, des polypropylènes, des PVC, des polyméthacrylates, des polystyrènes, des aminoplastes, et des mélamines.

10. Corps formé selon une des revendications 7 à 9, dans lequel le mélange de matières premières contient, en outre, une substance capable de fixer ou d'absorber l'eau, choisie dans le groupe du chlorure de calcium, de l'oxyde de calcium, du carbonate de potassium, de l'oxyde de magnésium, du sulfate de magnésium, de l'hydroxyde de potassium, du pentoxyde de phosphore, des tamis moléculaires, du sulfate de calcium, de l'anhydrite, du gypse calciné, des gels de silice, des alliages sodium - potassium, de l'oxyde d'aluminium, de l'acide oxalique, de l'acétate de potassium, du chlorure de lithium et du chlorure d'ammonium, en une quantité allant, de préférence, de 1 à 15 % en poids du poids total du mélange des matières premières.

11. Corps formé selon une des revendications 7 à 10, qui contient de 5 à 50 % en poids, de préférence de 10 à 35 % en poids de matériau synthétique thermoplastique ou thermodurcissable, de 1 à 50 % en poids, de préférence de 5 à 40 % en poids de biopolymère, de biomonomère ou de mélange de biopolymère et de biomonomère et de 5 à 85 % en poids de matériau fibreux végétal.

12. Corps formé selon une des revendications 7 à 11 qui contient, en outre, des additifs du groupe des agents de pontage, des colorants, des agents de démoulage, des stabilisants et des antioxydants, en une quantité correspondant, de préférence, à 0,2 - 10 % en poids de la masse totale.

13. Corps formé selon une des revendications 7 à 12, qui, sans conditionnement, présente une teneur en eau qui correspond à l'humidité moyenne de l'environnement.

14. Corps formé selon une des revendications 7 à 13, sous la forme de particules granulaires ou sous la forme d'un élément technique du groupe des règles, des baguettes, des éléments de façade, des éléments de plancher, des éléments de clôture, des conduites à câbles, des panneaux, des profilés, des revêtements, des matériaux d'emballage, des ornements et des dispositifs de dockage.

15. Corps formé selon une des revendications 7 à 14, pouvant être obtenu par un procédé selon une des revendications 1 à 6.
